# FASCICULE DE BREVET EUROPEEN

(11) **EP 2 432 065 B1**
(45) Date de publication et mention de la délivrance du brevet: **01.01.2014**
(21) Numéro de dépôt: 11354044.7
(22) Date de dépôt: 09.09.2011
(51) Int. Cl.: H01M 10/058, H01M 4/04, H01M 10/04

(54) **Procédé de structuration d'une couche polymère et procédé d'encapsulation d'une microbatterie**
Verfahren zur Strukturierung einer Polymerschicht und Verfahren zur Einkapselung einer Mikrobatterie
Method for structuring a polymer layer and method for encapsulating a microbattery

(30) Priorité: 20.09.2010 FR 1003726
(43) Date de publication de la demande: 21.03.2012
(73) Titulaire: Commissariat à l'Énergie Atomique et aux Énergies Alternatives, 75015 Paris (FR)
(72) Inventeur: Bedjaoui, Messaoud, 38130 Echirolles (FR); Poulet, Sylvain, 38110 Saint Victor de Cessieu (FR)
(74) Mandataire: Talbot, Alexandre

(56) Documents cités:
- EP-A1- 2 166 609
- WO-A1-2008/011061

## Description

### Domaine technique de l'invention

L'invention est relative à un procédé de structuration d'une couche en polymère sur un support, et plus particulièrement à un procédé d'encapsulation d'une microbatterie à l'aide d'une couche en polymère et d'une couche barrière.

### État de la technique

Les microbatteries au lithium sont généralement constituées de deux électrodes (positive et négative) séparées par un électrolyte. Elles comprennent en outre des collecteurs de courant métalliques, en platine ou tungstène. L'électrode positive est formée dans un matériau ayant une bonne conductivité ionique, par exemple l'oxysulfure de titane (TiOS). L'électrolyte est un isolant électrique ayant une forte conductivité ionique tel que l'oxynitrure de lithium et de phosphore (LiPON). L'électrode négative est constituée de lithium métallique ou d'un matériau lithié.

Les matériaux contenant du lithium étant très sensibles à l'air, et en particulier à l'oxygène et l'humidité, ils doivent être recouverts d'une barrière de protection inerte et étanche. La maîtrise de l'encapsulation est un facteur primordial qui conditionne l'efficacité dans le temps des microbatteries.

Une solution d'encapsulation consiste à déposer des couches minces sur la microbatterie. Le dispositif d'encapsulation comprend alors une première couche en matériau polymère disposée sur la microbatterie et une seconde couche en matériau céramique ou métallique recouvrant la première couche. La couche en matériau polymère vise, d'une part, à limiter les défauts liés à la rugosité du substrat, et d'autre part, à permettre l'accommodation des déformations de la microbatterie lors de son utilisation. La couche en matériau céramique ou métallique constitue une barrière de protection contre l'oxygène et l'humidité.

La couche polymère est généralement déposée à la tournette (« spin-coating » en anglais) sur la totalité du substrat tandis que la couche barrière est formée par un dépôt physique en phase vapeur (PVD) ou un dépôt chimique en phase vapeur assisté par plasma (PACVD).

Afin de structurer le dispositif d'encapsulation, deux techniques sont principalement employées. La première utilise un masque mécanique pour définir les motifs. Toutefois, des effets d'ombrage et de désalignement des masques apparaissent et causent une imprécision sur la position ou les dimensions du motif que l'on souhaite réaliser. Ces effets d'ombrage et de désalignement deviennent prépondérants pour des microbatteries de faibles dimensions. On tend alors à délaisser les masques mécaniques au profit de la seconde technique, la photolithographie.

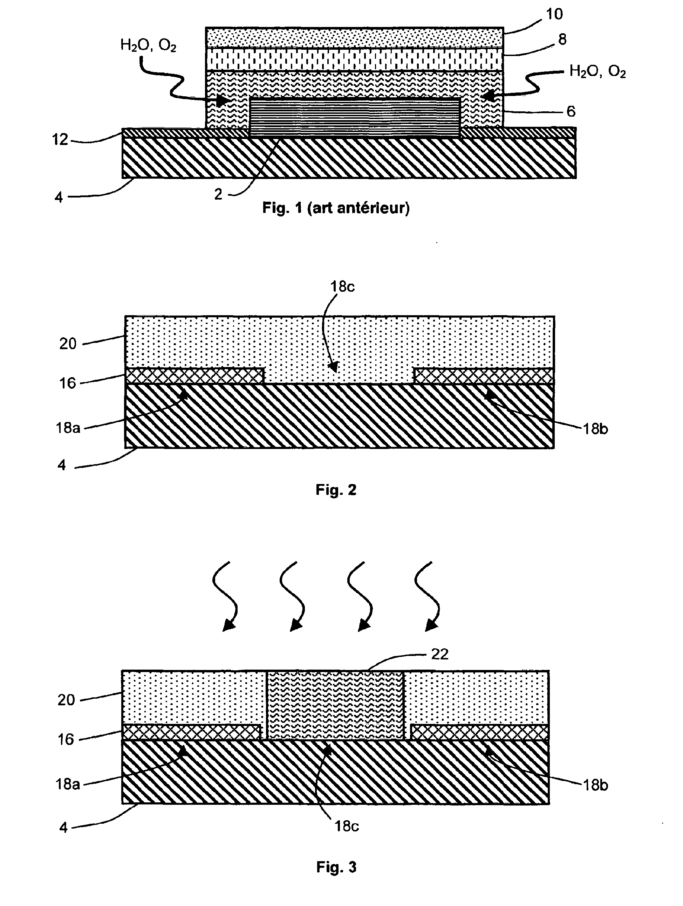

La figure 1 représente, de manière schématique, une opération de photolithographie pour délimiter un dispositif d'encapsulation d'une microbatterie 2 disposée sur un support 4. Le dispositif d'encapsulation comprend une couche polymère 6 et une couche barrière 8 déposées préalablement sur l'ensemble de la microbatterie 2 et du support 4. Un masque de gravure 10 en résine est formé sur le dispositif d'encapsulation puis les couches 6 et 8 sont gravées à travers le masque 10. Cette opération de photolithographie permet en outre d'établir les connexions électriques de la microbatterie, en libérant en partie les collecteurs de courant 12 situés aux extrémités de la microbatterie 2.

Cette technique de structuration ne garantit pas une protection latérale de la microbatterie. En effet, la couche barrière 8 ne recouvre pas la couche polymère 6 sur les flancs de la microbatterie (flancs de gravure), comme cela est visible sur la figure 1. Compte tenu du faible niveau de protection de la couche polymère, l'oxygène et l'eau risquent de diffuser à travers la couche 6 et de dégrader la microbatterie 2.

Si la dégradation de la microbatterie intervient principalement au niveau de la face supérieure pour des composants de grandes dimensions, la protection latérale de la microbatterie devient primordiale pour des composants de taille réduite. Ainsi, dans un effort de miniaturisation, il est nécessaire de recouvrir la totalité de la microbatterie avec la couche barrière pour augmenter sa durée de vie.

La photolithographie emploie une solution chimique de développement pour graver les couches d'encapsulation 6, 8 et une solution de nettoyage pour supprimer le masque de gravure 10. Ces solutions risquent également de pénétrer dans la microbatterie 2 et de la détériorer. Il existe en outre un effet de sur-gravure des couches 6 et 8, qui diminue davantage la protection latérale du composant. Enfin, la photolithographie se compose d'un grand nombre d'étapes qui allongent de façon significative les procédés de fabrication de microbatteries.

Les couches en matériau polymère étant déposées avec facilité sur l'ensemble d'un substrat, généralement par dépôt à la tournette, on souhaite disposer d'un procédé tout aussi simple pour structurer ces couches, notamment dans le cas d'une couche encapsulant une microbatterie.

### Résumé de l'invention

Il existe ainsi un besoin de prévoir un procédé simple et rapide pour structurer une couche en matériau polymère sur un support.

On tend à satisfaire ce besoin en déposant une couche en matériau inhibiteur de polymérisation à base de lithium sur une première zone du support, en déposant un matériau polymérisable par voie cationique sur la couche en matériau inhibiteur de polymérisation et sur une seconde zone du support, en soumettant le matériau polymérisable à un traitement de polymérisation, d'où il résulte une couche en matériau sacrificiel non solidifié dans la première zone et la couche en matériau polymère dans la seconde zone, et en éliminant la couche en matériau sacrificiel.

On prévoit également un procédé rapide et facile à mettre en oeuvre pour encapsuler une microbatterie au lithium disposée sur un support, permettant d'assurer une protection latérale de la microbatterie.

Le procédé d'encapsulation comprend le dépôt d'une couche en matériau inhibiteur de polymérisation à base de lithium sur le support à la périphérie de la microbatterie, le dépôt d'un matériau polymérisable par voie cationique sur l'ensemble de la microbatterie et sur la couche en matériau inhibiteur, un traitement de polymérisation appliqué au matériau polymérisable, d'où il résulte une couche en matériau sacrificiel non solidifié à la périphérie de la microbatterie et une couche en matériau polymère recouvrant la microbatterie, le dépôt d'une couche formant une barrière de protection sur la couche en matériau polymère et recouvrant l'ensemble de la microbatterie, et l'élimination de la couche en matériau sacrificiel et de la couche en matériau inhibiteur de polymérisation.

### Description sommaire des dessins

D'autres avantages et caractéristiques ressortiront plus clairement de la description qui va suivre de modes particuliers de réalisation donnés à titre d'exemples non limitatifs et illustrés à l'aide des dessins annexés, dans lesquels :
- la figure 1 représente une structuration de couches d'encapsulation d'une microbatterie par photolithographie, selon l'art antérieur,
- les figures 2 à 4 représentent des étapes d'un mode de mise en oeuvre d'un procédé de structuration d'une couche en polymère selon l'invention,
- les figures 5 à 10 représentent des étapes d'un mode de mise en oeuvre d'un procédé d'encapsulation d'une microbatterie utilisant le procédé des figures 2 à 4.

### Description d'un mode de réalisation préféré de l'invention

La polymérisation en chaîne désigne la réaction chimique entre des molécules réactives, généralement des monomères ou des prépolymères linéaires, qui se lient entre elles de façon covalente. Cette réaction en chaîne est initiée à l'aide d'amorceurs, appelés également initiateurs. Les amorceurs, sous l'action de la chaleur ou d'un rayonnement ultraviolet, libèrent des centres actifs sur lesquels se greffent les monomères. Il existe deux principaux mécanismes de polymérisation, radicalaire ou cationique, selon la nature de ces centres actifs.

Dans une polymérisation radicalaire, le centre actif est un radical, c'est-à-dire une espèce chimique ayant un ou plusieurs électrons non appariés. Le benzile et l'azobisisobutyronitrile (AIBN) sont des amorceurs couramment employés. Les monomères concernés par ce type de polymérisation sont, par exemple, les acrylates ou les méthacrylates.

Il est bien connu que la polymérisation radicalaire est inhibée par l'oxygène de l'air. Celui-ci se fixe sur les radicaux libres et forme des radicaux peroxydes, qui sont inactifs. Il est toutefois possible de réaliser une polymérisation radicalaire en présence d'oxygène, en utilisant des sensibilisateurs ou en augmentant l'intensité du rayonnement.

La polymérisation cationique fait intervenir un ion libre, ou éventuellement une paire d'ions, en tant que centre actif. Les amorceurs sont généralement des acides protoniques tels que l'acide sulfurique ou l'acide triflique. Contrairement à la polymérisation radicalaire, la polymérisation cationique est insensible à l'oxygène.

Par contre, il a été découvert par les inventeurs que la polymérisation par voie cationique est inhibée en présence de lithium. En effet, un matériau contenant du lithium présente la faculté de piéger les ions (les centres actifs) vecteurs de la réaction de polymérisation. Un tel matériau sera appelé par la suite inhibiteur de polymérisation.

On se propose d'utiliser ce phénomène pour rendre locale la polymérisation par voie cationique, en déposant une couche en matériau inhibiteur préalablement au dépôt d'un matériau polymérisable.
Les figures 2 à 4 représentent, de manière schématique, des étapes d'un mode de mise en oeuvre d'un procédé de structuration d'une couche en matériau polymère, à l'aide d'un matériau à base de lithium.
La figure 2 représente le dépôt d'une couche 16 en matériau inhibiteur à base de lithium sur un support 4 quelconque. La couche 16 en matériau inhibiteur est, à titre d'exemple, déposée dans deux zones distinctes 18a et 18b du support. Le matériau inhibiteur est, de préférence, du lithium sous forme métallique, de l'oxynitrure de lithium et de phosphore (LiPON), de l'oxysulfure de titane lithié (LiTiOS), du disulfure de titane lithié (LiTiS₂) ou du pentoxyde de vanadium lithié (LiV₂O₅). Le lithium métallique est, par exemple, déposé par évaporation sous vide et le LiPON peut être déposé par PVD. L'épaisseur de la couche 16 varie, de préférence, entre 50 nm et 3 µm.

Une couche 20 en matériau polymérisable est ensuite déposée sur la couche 16, ainsi que dans une zone 18c du support 4 comprise entre les zones 18a et 18b. Ce dépôt est, de préférence, réalisé à la tournette, pleine plaque, c'est-à-dire sur toute la face supérieure du support 4. L'épaisseur de la couche 20 varie alors entre 1 et 5 µm selon la vitesse de rotation. D'autres procédés de dépôt peuvent être employés comme la sérigraphie, la microdispersion ou l'aspersion. L'épaisseur de la couche 20 est généralement comprise aussi entre 1 et 5 µm.

Par matériau polymérisable, on entend une solution comprenant des monomères (ou prépolymères) et au moins un amorceur de type cationique. Les monomères à base d'éthers vinyliques ou les monomères hétérocycliques (époxydes, lactones, éthers cycliques, époxysilicones...) peuvent être utilisés. Les monomères époxydes et éthers vinyliques étant particulièrement réactifs, ils seront privilégiés de manière à obtenir une polymérisation rapide.

Certains produits du commerce, appelés communément résines photo-polymérisables ou thermodurcissables, comprennent ces monomères, notamment ceux commercialisés par la société Epoxy Technology sous la dénomination « OG » (OG146-178, UVO-114, OG115, OG114-4, OG146...) et sous la dénomination « Epo-Tek » (Epo-Tek-301, Epo-Tek-354, Epo-Tek-305, Epo-Tek-H705...).

L'amorceur est, de préférence, choisi parmi les acides protoniques (H₂SO₄, CF₃SO₃H...), les halogénures inorganiques (BF₃, SnCl₂...), les composés orgamétalliques (Al(CH₃)₃, complexes de type Salen...) et les sels organiques (R₃O⁺). L'amorceur est généralement intégré dans les résines susmentionnées.

A la figure 3, le matériau 20 est soumis à un traitement de polymérisation de manière que l'amorceur du matériau crée des ions pour initier la réaction en chaîne. Le matériau 20 est, de préférence, soumis à un traitement thermique (cas des thermo-amorceurs) ou exposé à un rayonnement (cas des photo-amorceurs). A titre d'exemple, la couche 20 est exposée à un rayonnement ultraviolet de longueur d'onde comprise entre 300 et 600 nm, pendant une durée inférieure à 10 min, avec une densité de puissance de l'ordre de 100 mW/cm²_{.}

Dans les zones 18a et 18b, les ions de la couche 20 responsables de l'amorçage de la chaîne de réticulation réagissent en grande partie avec les atomes du matériau 16 à base de lithium et ne peuvent donc initier la réaction de polymérisation. La couche 20 dans les zones 18a et 18b est donc laissée intacte ou faiblement polymérisée. A l'inverse, dans la zone 18c dépourvue de matériau 16, la réaction de polymérisation s'effectue normalement. Un motif 22 en matériau polymère est alors obtenu à l'issue du traitement.

En d'autres termes, on obtient lors de cette étape une couche avec des parties de natures différentes : une partie non ou peu polymérisée située à l'aplomb de la couche 16, et une partie polymérisée ailleurs. La partie non polymérisée, en contact avec le matériau 16, est soluble dans une solution de développement tandis que la partie polymérisée est insoluble dans celle-ci.

La partie non polymérisée peut s'étendre sur une zone allant jusqu'à 5 µm de hauteur environ (c'est-à-dire pour une épaisseur de couche 20 de 5 µm ou inférieure) et jusqu'à 1 µm latéralement (généralement entre 0,2 et 1 µm de chaque côté de la couche 16).

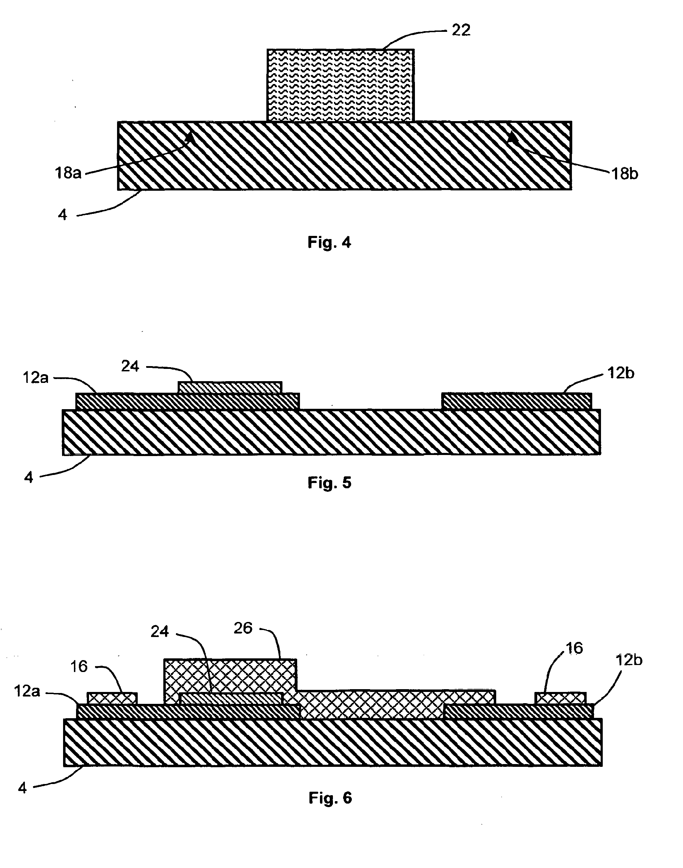

L'étape de la figure 4 consiste à éliminer le matériau polymérisable laissé intact dans les zones 18a et 18b. Cette étape d'élimination est, de préférence, réalisée à l'aide d'eau, d'un solvant ou de plusieurs solvants, tels que l'acétone ou l'éthanol. La couche 16 en matériau inhibiteur peut être éliminée simultanément, de manière à ne laisser que le motif souhaité 22 sur le support 4.

Ce procédé permet donc, de manière simple, de délimiter une couche en matériau polymère. Ce procédé est précis, rapide et facile à mettre en oeuvre, contrairement aux techniques de l'art antérieur. Il est parfaitement adapté à l'industrie microélectronique, en particulier pour l'encapsulation de microbatteries utilisant une couche polymère.
Les figures 5 à 10 représentent des étapes d'un mode de mise en oeuvre d'un procédé d'encapsulation d'une microbatterie au lithium. Ce mode de mise en oeuvre préférentiel comprend la formation de la microbatterie. Pour délimiter les différentes couches constituant la microbatterie, des masques mécaniques peuvent être utilisés. Le procédé de structuration décrit ci-dessus permet de délimiter le dispositif d'encapsulation disposé sur la microbatterie.
La figure 5 représente un substrat de départ 4 comprenant des collecteurs de courant cathodique 12a et anodique 12b, par exemple en titane, tungstène ou en or. Ces collecteurs de courant métalliques sont déposés sous forme de couches minces (200 nm environ), par PVD par exemple.
Une cathode 24 est ensuite déposée sur le collecteur cathodique 12a, par exemple par évaporation sous vide ou par pulvérisation cathodique. La cathode est formée dans une couche en matériau d'insertion du lithium, tel que l'oxysulfure de titane TiOS, le pentoxyde de vanadium V₂O₅ ou le disulfure de titane TiS₂. Son épaisseur est de l'ordre de 1,5 µm.

A la figure 6, une couche d'électrolyte 26, de préférence à base de LiPON, est déposée sur la cathode 24 ainsi que sur une partie du collecteur anodique 12b et sur la zone du substrat séparant les collecteurs 12a et 12b. La couche 26 recouvre, de préférence, intégralement la cathode 24. Le dépôt est, par exemple, réalisé par pulvérisation cathodique de manière à obtenir une couche en LiPON d'environ 1,5 µm d'épaisseur exempte de défauts.

Un motif en matériau inhibiteur de polymérisation 16 est formé à la périphérie de la microbatterie. Le matériau 16 est, de préférence, déposé sur le substrat 4 autour de la couche d'électrolyte 26, de manière à former un motif périphérique fermé, distinct de la couche 26. Le motif 16 recouvre, de préférence, une partie des collecteurs 12a et 12b, comme cela est représenté sur la vue en coupe de la figure 6. Dans cet exemple de réalisation, le motif 16 est, comme l'électrolyte 26, constitué de LiPON et son dépôt est réalisé en même temps que le dépôt de la couche 26, à l'aide d'un seul masque.

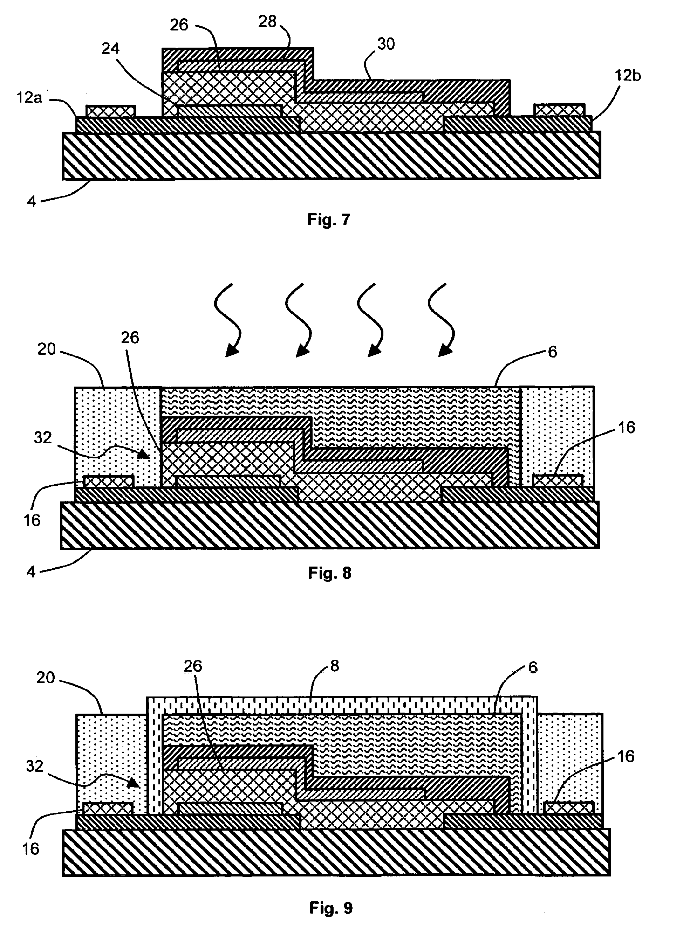

L'étape de la figure 7 correspond à la formation d'une anode 28 sur la couche 26. De préférence, l'anode 28 est constituée de lithium métallique et est déposée par évaporation sous vide. Son épaisseur varie entre 1 µm et 3 µm. Une couche métallique 30, par exemple en titane, or, aluminium ou cuivre, est ensuite déposée sur la face supérieure de l'anode 28 et sur une partie du collecteur 12b. La couche 30 réalise ainsi la connexion électrique entre l'anode 28 et le collecteur anodique 12b. Cette couche métallique permet de diminuer la rugosité de surface de la couche de lithium 28. Par ailleurs, la conduction du courant anodique est améliorée par rapport à une couche de lithium 28 s'étendant jusqu'au collecteur 12b.

Les figures 8 à 10 représentent des étapes de réalisation du dispositif d'encapsulation de la microbatterie. Le dispositif d'encapsulation comprend une couche 6 de type polymère disposée sur la microbatterie et une couche 8 de protection, ou couche barrière, disposée sur la couche en polymère.

Comme décrit précédemment, la couche en polymère limite les défauts liés à la rugosité du substrat pour améliorer l'effet protecteur de la couche barrière. Elle permet également d'absorber les déformations de la microbatterie lors des charges et décharges. Pour cela, on privilégie l'utilisation d'un polymère isolant ayant une souplesse mécanique élevée. On souhaite en outre un polymère facile à mettre en oeuvre et permettant d'aplanir la topographie de la microbatterie. Il est également préférable que le polymère soit stable thermiquement. En effet, la microbatterie (et son dispositif d'encapsulation) peut être soumise à des traitements thermiques à des températures de l'ordre de 260 °C en vue de son intégration sur des dispositifs externes.

Les matériaux à base d'époxydes répondent favorablement à ces spécificités de la technologie des microbatteries, notamment les produits de la société Epoxy Technology précédemment évoqués.

La figure 8 représente l'étape de formation de la couche 6 en polymère sur la microbatterie à partir d'une couche 20 en matériau polymérisable, comme décrit en relation avec la figure 3.

La couche 20 est déposée, de préférence, pleine plaque par dépôt à la tournette. Le matériau 20 recouvre alors le substrat 4, les collecteurs 12a et 12b, le motif 16 et la microbatterie.

En soumettant le matériau 20 à un traitement de polymérisation, celui-ci se solidifie pour former un matériau polymère, excepté dans la zone du motif 16 en matériau inhibiteur, à la périphérie de la microbatterie. On obtient ainsi la couche de polymère 6 souhaitée, qui recouvre en grande partie la microbatterie, entourée de matériau 20 non polymérisé.

Dans l'exemple de la figure 8, une zone latérale 32 de la microbatterie n'est pas recouverte par la couche 6 puisque le matériau 20 est en contact direct avec la couche 26 d'électrolyte dans cette zone. En effet, la couche 26 en LiPON empêche la polymérisation du matériau 20 au même titre que le motif 16. Toutefois, cette zone 32 non recouverte par le polymère 6 est sans incidence sur la protection de la microbatterie. L'étanchéité de la microbatterie face aux espèces chimiques est assurée par une couche barrière 8, formée ultérieurement, qui recouvre l'ensemble de la microbatterie.

La figure 9 représente le dépôt de la couche barrière 8 sur la couche 6 en polymère et sur les zones de la microbatterie non recouvertes par le polymère.

Le matériau de la couche 8 est, de préférence, choisi parmi l'oxyde de silicium, le nitrure de silicium, l'oxynitrure de silicium et l'alumine. La couche barrière 8 est, de préférence, déposée de manière conforme par PVD, CVD ou ALD (« Atomic Layer Deposition » en anglais). Son épaisseur est comprise entre 50 nm et 300 nm.

Lors de cette étape, le matériau 8 se dépose le long d'un profil, appelé également trame, défini par les couches de matériaux en phase solide. Dans l'exemple de la figure 9, cette trame est composée de la couche 6 de polymère et de la couche 26 d'électrolyte dans la zone 32. Le matériau 20 non polymérisé ne fait pas partie de la trame.

En d'autres termes, le matériau de la couche 8 se dépose sur la face supérieure de la couche 6 et s'insère au niveau des flancs de la microbatterie entre la couche 6 solide et le matériau 20 resté à l'état liquide ou bien entre la couche 26 et le matériau 20.

Ainsi, en délimitant au préalable la couche 6 en polymère à l'aide d'un matériau inhibiteur, la couche barrière 8 se dépose aussi bien sur les flancs que sur la face supérieure de la microbatterie. L'encapsulation de la microbatterie est donc totale.

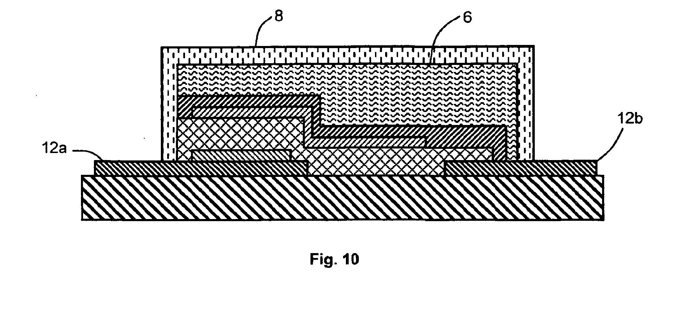

A la figure 10, le matériau n'ayant pas polymérisé et le matériau inhibiteur sont éliminés à l'aide d'une solution de développement. A titre d'exemple, l'élimination de la couche 16 en LiPON et du matériau 20 restant peut être réalisée à l'aide d'une solution d'acide phosphorique (H₃PO₄), suivi d'un rinçage à l'eau.

La couche barrière 8 recouvrant l'ensemble de la microbatterie, les solutions de développement et de rinçage ne risquent pas de s'infiltrer dans la microbatterie et de l'endommager. Par ailleurs, la connexion électrique de la microbatterie en face avant du substrat est facilitée. En effet, le matériau inhibiteur ayant été déposé en partie sur les collecteurs métalliques 12a et 12b, ces derniers sont libérés lors du développement.

Le procédé d'encapsulation de microbatterie, décrit en relation avec les figures 5 à 10, comprend avantageusement le dépôt du matériau inhibiteur 16 à base de lithium pendant la formation de la microbatterie. En effet, le matériau 16 et l'électrolyte 26 sont tous deux constitués de LiPON et sont déposés simultanément. Toutefois, il est également possible de réaliser le dépôt du matériau inhibiteur en même temps que le dépôt de l'anode, avec du lithium métallique, ou que le dépôt de la cathode avec du LiTiOS, LiTiS₂ et LiV₂O₅.

Dans une variante de réalisation, le dépôt du matériau inhibiteur est réalisé après avoir former la microbatterie sur le substrat. Ce dépôt constitue alors une étape supplémentaire par rapport au mode de mise en oeuvre préférentiel décrit ci-dessus. Cette variante de réalisation est, par exemple, utilisée lorsque l'électrolyte est un matériau autre que le LiPON ou lorsque l'anode est dans un matériau autre que le lithium métallique ou lorsque la cathode est en un matériau autre que LiTiOS, LiTiS₂ et LiV₂O₅.

Le procédé d'encapsulation est rapide et facile à mettre en oeuvre. En effet, il comporte un nombre d'étapes restreint par rapport à une opération de photolithographie classique et ces étapes sont compatibles avec les technologies de la microélectronique.

## Revendications

1. Procédé de structuration d'une couche en matériau polymère (6, 22) sur un support (4) comprenant les étapes suivantes :
- déposer une couche en matériau inhibiteur (16) de polymérisation à base de lithium sur une première zone (18a, 18b) du support,
- déposer un matériau polymérisable (20) par voie cationique sur la couche en matériau inhibiteur de polymérisation (16) et sur une seconde zone (18c) du support,
- soumettre le matériau polymérisable à un traitement de polymérisation, d'où il résulte une couche en matériau sacrificiel (20) non solidifié dans la première zone et ladite couche en matériau polymère (6, 22) dans la seconde zone, et
- éliminer la couche en matériau sacrificiel (20).

2. Procédé selon la revendication 1, **caractérisé en ce que** le matériau inhibiteur de polymérisation (16) est choisi parmi le lithium métallique, l'oxynitrure de lithium et de phosphore (LiPON), l'oxysulfure de titane lithié (LiTiOS), le disulfure de titane lithié (LiTiS₂) et le pentoxyde de vanadium lithié (LiV₂O₅).

3. Procédé selon la revendication 1, **caractérisé en ce que** la couche en matériau inhibiteur de polymérisation (16) est éliminée en même temps que la couche en matériau sacrificiel (20).

4. Procédé selon la revendication 1, **caractérisé en ce que** le matériau polymérisable par voie cationique (20) est polymérisé par irradiation aux ultraviolets ou par voie thermique.

5. Procédé selon la revendication 1, **caractérisé en ce que** le matériau polymérisable par voie cationique (20) comprend des monomères époxydes ou éthers vinyliques et un amorceur à base d'acide protonique.

6. Procédé d'encapsulation d'une microbatterie (2) au lithium disposée sur un support (4), comprenant les étapes suivantes :
- déposer une couche en matériau inhibiteur de polymérisation (16) à base de lithium sur le support à la périphérie de la microbatterie,
- déposer un matériau polymérisable par voie cationique (20) sur l'ensemble de la microbatterie (2) et sur la couche en matériau inhibiteur (16),
- soumettre le matériau polymérisable à un traitement de polymérisation, d'où il résulte une couche en matériau sacrificiel (20) non solidifié à la périphérie de la microbatterie et une couche en matériau polymère (6) recouvrant la microbatterie (2),
- déposer une couche (8) formant une barrière de protection sur la couche en polymère (6) et recouvrant l'ensemble de la microbatterie (2),
- éliminer la couche en matériau sacrificiel (16) et la couche en matériau inhibiteur de polymérisation (20).

7. Procédé selon la revendication 6, **caractérisé en ce que** le matériau inhibiteur de polymérisation (16) est choisi parmi le lithium métallique, l'oxynitrure de lithium et de phosphore (LiPON), l'oxysulfure de titane lithié (LiTiOS), le disulfure de titane lithié (LiTiS₂) et le pentoxyde de vanadium lithié (LiV₂O₅).

8. Procédé selon la revendication 6, **caractérisé en ce que** le procédé comprend la formation de la microbatterie (2) sur le support (4).

9. Procédé selon la revendication 8, **caractérisé en ce que**, la microbatterie (2) comportant une électrode (24, 28) en lithium métallique, en oxysulfure de titane lithié (LiTiOS), en disulfure de titane lithié (LiTiS₂) ou en pentoxyde de vanadium lithié (LiV₂O₅), le dépôt de la couche en matériau inhibiteur (16) et le dépôt de l'électrode sont effectués lors d'une même étape.

10. Procédé selon la revendication 8, **caractérisé en ce que**, la microbatterie (2) comportant un électrolyte (26) en oxynitrure de lithium et de phosphore (LiPON), le dépôt de la couche en matériau inhibiteur (16) et le dépôt de l'électrolyte sont effectués lors d'une même étape.

## Patentansprüche

1. Verfahren zur Strukturierung einer Schicht aus Polymermaterial (6, 22) auf einem Träger (4), umfassend die folgenden Schritte:
- Abscheiden einer Schicht aus polymerisationsinhibierendem Material (16) auf Lithium-Basis auf einem ersten Bereich (18a, 18b) des Trägers,
- Abscheiden eines auf kationischem Weg polymerisierbaren Materials (20) auf der Schicht aus polymerisationsinhibierendem Material (16) und auf einem zweiten Bereich (18c) des Trägers,
- Unterziehen des polymerisierbaren Materials einer Polymerisationsbehandlung, woraus eine Schicht aus nicht verfestigtem Opfermaterial (20) in dem ersten Bereich und die Schicht aus Polymermaterial (6, 22) in dem zweiten Bereich hervorgehen, und
- Entfernen der Schicht aus Opfermaterial (20).

2. Verfahren nach Anspruch 1, **dadurch gekennzeichnet, dass** das polymerisationsinhibierende Material (16) aus metallischem Lithium, Lithium- und Phosphoroxinitrid (LiPON), lithiiertem Titanoxysulfid (LiTiOS), lithiiertem Titandisulfid (LiTiS₂) und lithiiertem Vanadiumpentoxid (LiV₂O₅) ausgewählt ist.

3. Verfahren nach Anspruch 1, **dadurch gekennzeichnet, dass** die Schicht aus polymerisationsinhibierendem Material (16) gleichzeitig mit der Opfermaterialschicht (20) entfernt wird.

4. Verfahren nach Anspruch 1, **dadurch gekennzeichnet, dass** das auf kationischem Weg polymerisierbare Material (20) durch UV-Bestrahlung oder auf thermischem Weg polymerisiert wird.

5. Verfahren nach Anspruch 1, **dadurch gekennzeichnet, dass** das auf kationischem Weg polymerisierbare Material (20) Epoxid- oder Vinylether-Monomere sowie einen Initiator auf der Basis von Protonensäure umfasst.

6. Verfahren zur Einkapselung einer Lithium-Mikrobatterie (2), die auf einem Träger (4) angeordnet ist, umfassend die folgenden Schritte:
- Abscheiden einer Schicht aus polymerisationsinhibierendem Material (16) auf Lithium-Basis auf dem Träger am Umfang der Mikrobatterie,
- Abscheiden eines auf kationischem Weg polymerisierbaren Materials (20) auf der gesamten Mikrobatterie (2) und auf der Schicht aus inhibierendem Material (16),
- Unterziehen des polymerisierbaren Materials einer Polymerisationsbehandlung, woraus eine Schicht aus nicht verfestigtem Opfermaterial (20) am Umfang der Mikrobatterie und eine Schicht aus Polymermaterial (6), welche die Mikrobatterie (2) bedeckt, hervorgehen,
- Abscheiden einer Schicht (8), die eine Schutzbarriere auf der Polymerschicht (6) bildet und die gesamte Mikrobatterie (2) bedeckt,
- Entfernen der Schicht aus Opfermaterial (16) und der Schicht aus polymerisationsinhibierendem Material (20).

7. Verfahren nach Anspruch 6, **dadurch gekennzeichnet, dass** das polymerisationsinhibierende Material (16) aus metallischem Lithium, Lithium- und Phosphoroxinitrid (LiPON), lithiiertem Titanoxysulfid (LiTiOS), lithiiertem Titandisulfid (LiTiS₂) und lithiiertem Vanadiumpentoxid (LiV₂O₅) ausgewählt ist.

8. Verfahren nach Anspruch 6, **dadurch gekennzeichnet, dass** das Verfahren die Bildung der Mikrobatterie (2) auf dem Träger (4) umfasst.

9. Verfahren nach Anspruch 8, **dadurch gekennzeichnet, dass**, wenn die Mikrobatterie (2) eine Elektrode (24, 28) aus metallischem Lithium, aus lithiiertem Titanoxysulfid (LiTiOS), aus lithiiertem Titandisulfid (LiTiS₂) oder aus lithiiertem Vanadiumpentoxid (LiV₂O₅) umfasst, das Abscheiden der Schicht aus inhibierendem Material (16) und das Abscheiden der Elektrode während eines gleichen Schrittes vollzogen werden.

10. Verfahren nach Anspruch 8, **dadurch gekennzeichnet, dass**, wenn die Mikrobatterie (2) einen Elektrolyten (26) aus Lithium- und Phosphoroxinitrid (LiPON) umfasst, das Abscheiden der Schicht aus inhibierendem Material (16) und das Abscheiden des Elektrolyten während eines gleichen Schrittes vollzogen werden.

## Claims

1. A method for patterning a polymer layer (6, 22) arranged on a support (4) comprising the following steps:
- depositing a layer made from a lithium-based polymerization inhibitor material (16) on a first area (18a, 18b) of the support,
- depositing a cationically polymerizable material (20) on the layer made from polymerization inhibitor material (16) and on a second area (18c) of the support,
- subjecting the polymerizable material to a polymerization treatment resulting in a layer made from a non-solidified sacrificial material (20) in the first area and said layer made from polymer material (6, 22) in the second area, and
- eliminating the layer made from sacrificial material (20).

2. The method according to claim 1, **characterized in that** the polymerization inhibitor material (16) is chosen from metal lithium, lithium phosphorus oxynitride (LiPON), lithiated titanium oxysulfide (LiTiOS), lithiated titanium disulfide (LiTiS₂) and lithiated vanadium pentoxide (LiV₂O₅).

3. The method according to claim 1, **characterized in that** it comprises elimination of the layer made from polymerization inhibitor material (16) simultaneously with elimination of the layer made from sacrificial material (20).

4. The method according to claim 1, **characterized in that** the cationically polymerizable material (20) is polymerized by ultraviolet irradiation or by heat treatment.

5. The method according to claim 1, **characterized in that** the cationically polymerizable material (20) comprises epoxide or vinyl ether monomers and a protonic acid-based initiator.

6. A method for packaging a lithium microbattery (2) arranged on a support (4), comprising the following steps:
- depositing a layer made from a lithium-based polymerization inhibitor material (16) on the support at the periphery of the microbattery,
- depositing a cationically polymerizable material (20) on the whole of the microbattery (2) and on the layer made from inhibitor material (16),
- subjecting the polymerizable material to polymerization treatment resulting in a layer made from a non-solidified sacrificial material (20) at the periphery of the microbattery and a layer made from polymer material (6) covering the microbattery (2),
- depositing a layer (8) forming a protective barrier on the polymer layer (6) and covering the whole of the microbattery (2),
- eliminating the layer made from sacrificial material (16) and the layer made from polymerization inhibitor material (20).

7. The method according to claim 6, **characterized in that** the polymerization inhibitor material (16) is chosen from metal lithium, lithium phosphorus oxynitride (LiPON), lithiated titanium oxysulfide (LiTiOS), lithiated titanium disulfide (LiTiS₂) and lithiated vanadium pentoxide (LiV₂O₅).

8. The method according to claim 6, **characterized in that** it comprises formation of the microbattery (2) on the support (4).

9. The method according to claim 8, **characterized in that**, the microbattery (2) comprising an electrode (24, 28) made from metal lithium, lithiated titanium oxysulfide (LiTiOS), lithiated titanium disulfide (LiTiS₂) or lithiated vanadium pentoxide (LiV₂O₅), deposition of the layer made from polymerization inhibitor material (16) and deposition of the electrode are performed simultaneously.

10. The method according to claim 8, **characterized in that**, the microbattery (2) comprising an electrolyte (26) made from lithium phosphorus oxynitride (LiPON), deposition of the layer made from inhibitor materiam (16) and deposition of the electrolyte are performed simultaneously.
